# EUROPEAN PATENT APPLICATION

(11) **EP 1 123 676 A1**
(43) Date of publication of application: **16.08.2001**
(21) Application number: 01300996.4
(22) Date of filing: 05.02.2001
(51) Int. Cl.: A47J 31/36, A47J 31/40, A47J 31/46

(54) **Beverage extracting apparatus provided with an open receptacle interposed between a hot water tank and a hot water pump**

(30) Priority: 08.02.2000 JP 2000030750
(71) Applicant: SANDEN CORPORATION, Isesaki-shi Gunma 372 (JP)
(72) Inventor: Sato, Takeshi, Isesaki-shi, Gunma 372 (JP); Matsuo, Takao, Isesaki-shi, Gunma 372 (JP)
(74) Representative: Haley, Stephen

(57) **Abstract**

In a beverage extracting apparatus (10) for extracting a beverage by pouring hot water into a cartridge (1) charged with a powdery material, an open receptacle (12) is interposed between a hot water tank (11) and a hot water pump (13). The open receptacle is open to ambient air and connected to the hot water tank to be supplied with the hot water from the hot water tank. The hot water pump is connected to the open receptacle and carries out a hot water supplying operation of sucking the hot water in the open receptacle and supplying the hot water into the cartridge.

## Description

This invention relates to a beverage extracting apparatus for extracting a predetermined beverage by supplying hot water into a cartridge containing a powdery material such as coffee powder and tea powder. For example, the beverage extracting apparatus of the type is equipped in an automatic vending machine for dispensing a cup of beverage.

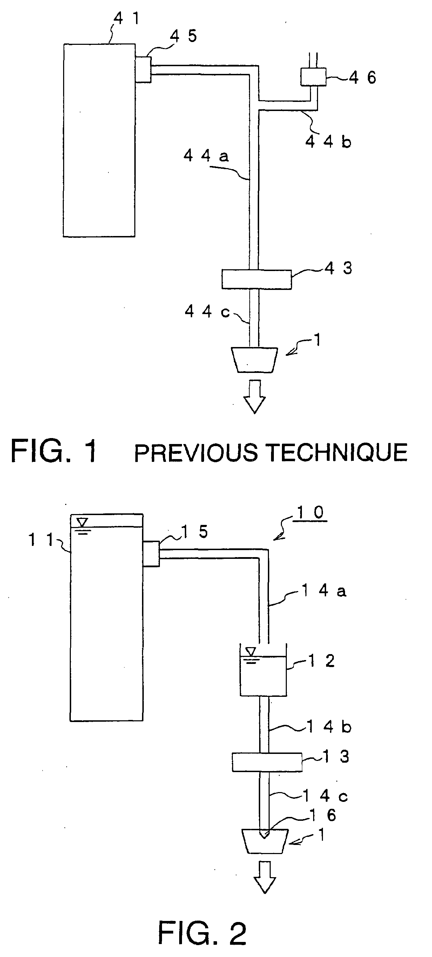

Referring to Fig. 1, description will be made of an existing beverage extracting apparatus for extracting a predetermined beverage. The beverage extracting apparatus illustrated in the figure comprises a hot water tank 41 for reserving hot water and a hot water pump 43 for sucking the hot water from the hot water tank 41. The hot water tank 41 is connected to the hot water pump 43 through an upstream hot water supply pipe 44a. The upstream hot water supply pipe 44a has an upstream end connected to the hot water tank 41 and provided with a first electromagnetic valve 45, an intermediate portion connected to an air suction pipe 44b provided with a second electromagnetic valve 46, and a downstream end connected to the hot water pump 43 which is connected to a downstream hot water supply pipe 44c. The hot water pump 43 serves to pressure-feed the hot water into a cartridge 1 preliminarily charged with a single cup quantity, i.e., a single dose of a powdery material so that the predetermined beverage is extracted. It is noted here that the term "a single cup quantity" means a predetermined quantity required to prepare to a single cup of beverage.

In response to a vending or dispensing request signal, the first electromagnetic valve 45 is opened for a first predetermined time duration. While the first electromagnetic valve 45 is opened, the hot water pump 43 sucks the hot water through the upstream hot water supply pipe 44a and then pressure-feeds the hot water into the cartridge 1 through the downstream hot water supply pipe 44c. When the first electromagnetic valve 45 is closed after lapse of the first predetermined time duration, the second electromagnetic valve 46 is opened for a second predetermined time duration. While the second electromagnetic valve 46 is opened, the hot water pump 43 sucks the air through the air suction pipe 44b and the upstream hot water supply pipe 44a and feeds the air as an air blow to the cartridge 1 through the downstream hot water supply pipe 44c. The air blow serves to discharge water drops attached to an inner wall of the downstream hot water supply pipe 44c as well as moisture remaining in the powdery material within the cartridge 1 so that the powdery material is dried. Therefore, the quantity and the quality of the beverage in every extracting operation is rendered uniform to some extent by the above-mentioned air blow.

However, since the hot water pump 43 sucks the hot water directly from the hot water tank 41, the amount of the hot water sucked from the hot water tank 41 is inevitably varied depending upon various factors such as the grain size, the amount, and the density of the powdery material within the cartridge 1 as well as the performance of the hot water pump 43. The variation in amount of the hot water sucked from the hot water tank 41 results in variation in amount of the hot water supplied to the cartridge 1 and in amount of the beverage extracted from the cartridge 1. Thus, the quantity and the quality of the beverage in every extracting operation become nonuniform.

Furthermore, upon feeding the air blow, suction resistance is produced by the second electromagnetic valve 46 which has a narrow channel even if it is opened. Therefore, it is difficult to smoothly suck and feed the air by the hot water pump 43. In addition, it is troublesome to open and close the second electromagnetic valve 46 exclusively for sucking the air.

It is therefore an object of this invention to provide a beverage extracting apparatus in which the amount of hot water supplied by a hot water pump and the amount of a beverage extracted can be accurately and reliably kept constant.

It is another object of this invention to provide a beverage extracting apparatus in which an air feeding operation can easily and smoothly be carried out after a hot water supplying operation.

According to this invention, there is provided a beverage extracting apparatus for extracting a beverage by pouring hot water into a cartridge charged with a powdery material, the apparatus comprising a hot water tank for reserving the hot water, an open receptacle open to ambient air, connected to the hot water tank to be supplied with the hot water from the hot water tank, and a hot water pump connected to the open receptacle for carrying out a hot water supplying operation of sucking the hot water in the open receptacle and supplying the hot water into the cartridge.

In the Drawings;
Fig. 1 is a schematic view of an existing beverage extracting apparatus;
Fig. 2 is a schematic view of a beverage extracting apparatus according to a first embodiment of this invention;
Fig. 3 is a block diagram of a control section of the beverage extracting apparatus illustrated in Fig. 2;
Fig. 4 is a flow chart for describing an operation of the beverage extracting apparatus illustrated in Fig. 2; and
Fig. 5 is a schematic view of a beverage extracting apparatus according to a second embodiment of this invention.

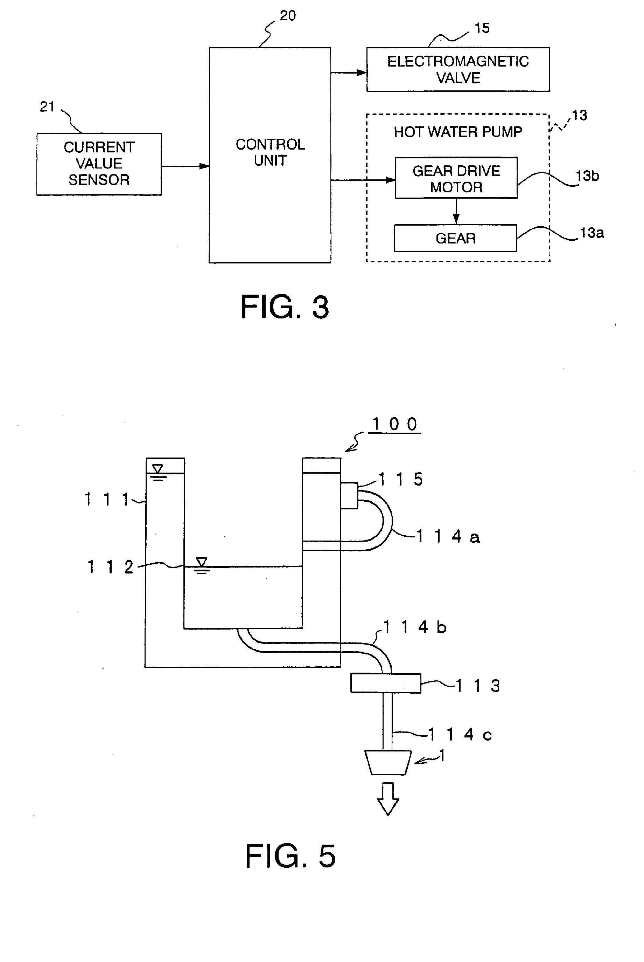

Referring to Figs. 2 and 3, a beverage extracting apparatus 10 for extracting a beverage according to a first embodiment of this invention is equipped in an automatic vending machine (not shown) for dispensing a cup of beverage. The beverage extracting apparatus 10 comprises a water tank 11 for reserving hot water kept at about 98°C, an open receptacle or container 12 open to ambient air, and a hot water pump 13 of a so-called gear rotation type. The hot water pump 13 comprises a casing (not shown), a gear apparatus 13a contained in the casing, and a gear drive motor 13b for driving the gear apparatus 13a.

The gear apparatus comprises two gears engaged with each other in the casing. The gear drive motor 13b rotates one of the gears. As the hot water pump 43, use may be made of a compressor apparatus disclosed in U.S. Patent No. 5,246,358.

The water tank 11 communicates with an upper part of the open receptacle 12 through an upstream hot water supply pipe 14a. A lower part of the open receptacle 12 communicates with the hot water pump 13 through an intermediate hot water supply pipe 14b. The hot water pump 13 is connected at its downstream side to a downstream hot water supply pipe 14c. The upstream hot water supply pipe 14a is provided with an electromagnetic valve 15 arranged at an upstream end thereof. The downstream hot water supply pipe 14c is provided with a hot water supply nozzle 16 attached to its downstream end. The beverage extracting apparatus 10 further comprises a control unit 20 implemented by a microcomputer or the like for controlling the electromagnetic valve 15 and the hot water pump 13 in response to a vending or dispensing request signal.

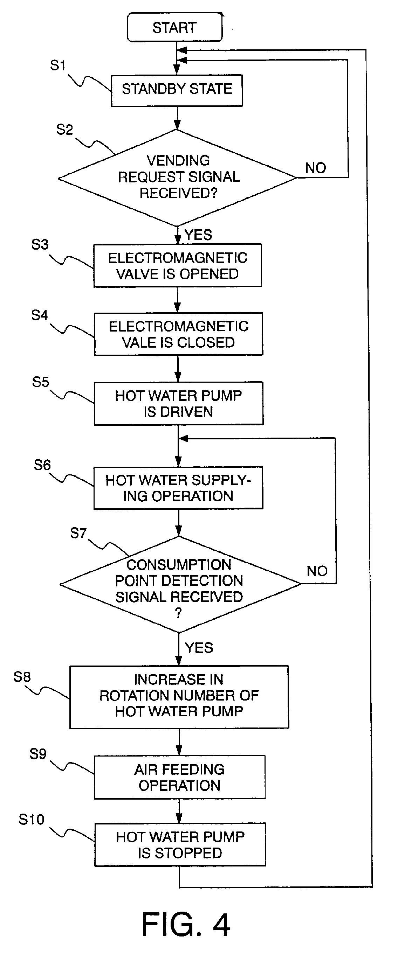

Referring to Fig. 4 in addition, description will be made of an operation of the beverage extracting apparatus 10. When a user presses a commodity selection button (not shown) during a standby state (step S1), the vending request signal is produced. Supplied with the vending request signal (yes in step S2), the control unit 20 opens the electromagnetic valve 15 (step S3).

Before the electromagnetic valve 15 is opened, a single cartridge 1 is transferred from a container storage (not shown) to a nozzle position where an end of the hot water supply nozzle 16 is received in the cartridge 1. The cartridge 1 is a special container made of plastic and preliminarily charged with a single cup quantity of coffee powder. The cartridge 1 is adapted to receive the end of the hot water supply nozzle 16 in an airtight condition and has a filtering function.

When the electromagnetic valve 15 is opened for a predetermined time duration as a valve opening duration under control of the control unit 20, the hot water is supplied from the hot water tank 11 through the upstream hot water supply pipe 14a into the open receptacle 12 under a pressure head of the hot water in the hot water tank 11. The height of a hot water surface in the hot water tank 11 in the standby state and the valve opening duration of the electromagnetic valve 15 are kept constant so that the amount of the hot water supplied from the hot water tank 11 into the open receptacle 12 can accurately be kept constant. In this manner, a predetermined amount of the hot water is temporarily reserved in the open receptacle 12.

Then, the control unit 20 closes the electromagnetic valve 15 (step S4). Almost simultaneously, the control unit 20 drives the gear drive motor 13b to drive the gear apparatus 13a of the hot water pump 13 by a predetermined number of revolution (step S5). As a consequence, a hot water supplying operation is performed in which the hot water in the open receptacle 2 is entirely sucked through the intermediate hot water supply pipe 14b and pressure-fed into the cartridge 1 through the downstream hot water supply pipe 14c (step S6). By completely consuming the hot water temporarily reserved in the open receptacle 12, the amount of the beverage extracted from the cartridge 1 can be kept constant irrespective of the density of the powdery material within the cartridge 1 and the performance of the hot water pump 13. Since the open receptacle 12 is open to ambient air, the hot water can be smoothly sucked by the hot water pump 13 without any suction resistance.

The hot water supplying operation of supplying the hot water into the cartridge 1 is continued until the hot water in the open receptacle 12 is completely discharged or consumed. When the hot water is completely discharged from the open receptacle 12, a load of the hot water pump 13 is rapidly decreased. The decrease of the load of the hot water pump 13 results in decrease in current value of the gear drive motor 13b as known in the art. The decrease in current value of the gear drive motor 13b is detected by a load sensor or a current value sensor 21. The current value sensor 21 produces a consumption point detection signal and delivers the consumption point detection signal to the control unit 20. Thus, the current value sensor 21 detects a consumption point when the hot water is completely discharged from the open receptacle 12.

Supplied with the consumption point detection signal (yes in step S7), the control unit 20 increases the rotation number of the gear drive motor 13b, i.e., the rotation number of the gear apparatus 13a, by inverter control or the like (step S8) to continuously operate the hot water pump 13 for a preselected time duration. Thus, the hot water pump 13 carries out an air feeding operation of sucking the air through the open receptacle 12 and the downstream hot water supply pipe 14c and feeding the air as an air blow towards the cartridge 1 (step S9). By increasing the rotation number of the gear drive motor 13b, the hot water pump 13 is increased in air sucking and feeding abilities.

In case where the gear drive motor 13b is controlled to increase the rotation number although the hot water still remains in the open receptacle 12, the cartridge 1 is subjected to high pressure exerted by the hot water pump 13. In this event, there is a risk that the cartridge 1 will be burst. However, such risk can be removed by matching the timing of increasing the rotation number of the gear drive motor 13b with the consumption point when the hot water within the open receptacle 12 is sucked by the hot water pump 13 to be completely consumed, as described in the foregoing. It is noted that the air feeding operation by the hot water pump 13 is carried out through the open receptacle 12 and is therefore smooth without any suction resistance. In addition, the cost is reduced because an additional pipe and an additional electromagnetic valve exclusively for sucking the air are not required.

After the hot water pump 13 carries out the above-mentioned air feeding operation for the preselected time duration, the hot water pump 13 is stopped (step S10).

The consumption point detection signal mentioned above may be produced in the manner (a) or (b) described hereunder.
(a) Since the load of the hot water pump 13 is reduced at the consumption point, the rotation number of the gear apparatus 13a is slightly increased. The slight change in rotation number of the gear apparatus 13a is detected by a rotation number sensor (not shown) such as a rotary encoder to produce the consumption point detection signal mentioned above.
(b) At the consumption point, a discharge pressure of the hot water discharged from the hot water pump 13 is rapidly decreased. A pressure sensor or a pressure switch (not shown) is arranged inside the downstream hot water supply pipe 14c at an upstream end thereof, i.e., at a discharge portion (not shown) of the hot water pump 13 to detect the variation in discharge pressure of the hot water from the hot water pump 13 and produce the consumption point detection signal.

Next referring to Fig. 7, description will be made of a beverage extracting apparatus 100 for extracting a beverage according to a second embodiment of this invention. The beverage extracting apparatus 100 illustrated in the figure comprises a hot water tank 111 and an open receptacle 112 open to ambient air and incorporated inside the hot water tank 111. The hot water tank 111 and the open receptacle 112 communicate with each other through an upstream hot water supply pipe 114a. The upstream hot water supply pipe 114a penetrates a side wall of the hot water tank 111 and extends from the outside to the inside of the hot water tank 111 to be connected to a side wall of the open receptacle 112. The open receptacle 112 is connected to an intermediate hot water supply pipe 114b extending from a bottom thereof through a lower part of the side wall of the hot water tank 112 to the outside of the hot water tank 112 where it is connected to a hot water pump 113. The hot water pump 113 is connected at its downstream side to a downstream hot water supply pipe 114c. The upstream hot water supply pipe 114a is provided with an electromagnetic valve 115 arranged at its upstream end.

The beverage extracting apparatus 100 is operated in the manner similar to the beverage extracting apparatus 10 illustrated in Fig. 2. That is, a predetermined amount of hot water temporarily reserved in the open receptacle 112 is entirely sucked by the hot water pump 113 to be completely consumed so that the variation in amount of the beverage extracted is avoided. Furthermore, by increasing the rotation number of a gear (not shown) of the hot water pump 113, an air feeding operation is carried out through the open receptacle 112 which becomes empty. Thus, an air blow can be smoothly and powerfully fed. In the beverage extracting apparatus 100, the open receptacle 112 is heated by the hot water within the hot water tank 111 or a heater. Therefore, the hot water reserved in the open receptacle 112 is prevented from being lowered in temperature.

## Claims

1. A beverage extracting apparatus for extracting a beverage by pouring hot water into a cartridge charged with a powdery material, said apparatus comprising:
a hot water tank for reserving the hot water;
an open receptacle open to ambient air, connected to said hot water tank to be supplied with the hot water from said hot water tank; and
a hot water pump connected to said open receptacle for carrying out a hot water supplying operation of sucking the hot water in said open receptacle and supplying the hot water into said cartridge.

2. A beverage extracting apparatus as claimed in claim 1, wherein said open receptacle is arranged inside said hot water tank.

3. A beverage extracting apparatus as claimed in claim 1, wherein said hot water pump carries out an air feeding operation, following said hot water supplying operation, to suck the air through said open receptacle and to feed the air to said cartridge..

4. A beverage extracting apparatus as claimed in claim 3, wherein said hot water pump is driven with a rotation number which is variable, further comprising a control unit connected to said hot water pump for controlling said hot water pump so that said the rotation number is increased in said air feeding operation than in said hot water supplying operation.

5. A beverage extracting apparatus as claimed in claim 4, further comprising consumption point detecting means connected to said control unit for detecting a consumption point of consumption of the hot water in said open receptacle and producing a consumption point detection signal to supply said consumption point detection signal to said control unit.

6. A beverage extracting apparatus as claimed in claim 5, wherein said consumption point detecting means is a load sensor connected to said hot water pump for producing said consumption point detection signal in response to the variation in load of said hot water pump.

7. A beverage extracting apparatus as claimed in claim 6, wherein said load sensor is a current value sensor connected to said hot water pump for detecting a current value of said hot water sensor to produce said consumption point detection signal.

8. A beverage extracting apparatus as claimed in claim 6, wherein said load sensor is a rotation number sensor connected to said hot water pump for detecting said rotation number to produce said consumption point detection signal.

9. A beverage extracting apparatus as claimed in claim 5, wherein said consumption point detecting means is a pressure detector connected to said hot water pump for producing said consumption point detection signal in response to the variation in discharge pressure of the hot water from said hot water pump.
